# EUROPÄISCHE PATENTANMELDUNG

(11) **EP 0 994 310 A1**
(43) Veröffentlichungstag der Anmeldung: **19.04.2000**
(21) Anmeldenummer: 98119556.3
(22) Anmeldetag: 16.10.1998
(51) Int. Cl.: F24D 3/14

(54) **Rohrregister**

(71) Anmelder: Polygo Holding GmbH, 94559 Niederwinkling (DE)
(72) Erfinder: Steiner, Josef, 3370 Ybbs (AT)

(57) **Zusammenfassung**

Die Erfindung betrifft ein Rohrregister mit beispielsweise mäanderförmigen Verlauf der Rohre auf Systemplatten, oder sonstigen Flächen, wie Böden, Wände, Decken, etc., beispielsweise Kalt- und Warmwasserleitungen für Sanitäranlagen, Wärmetauscher in Heiz-, Kühl- und Klimaanlagen Schutzrohre usw., bei dem die Rohre in Rohrhaltern festgelegt sind und zum Zwecke des Verhinderns des Aufschwimmens bei Fließestrichen und von Verwerfungen der vor der Verarbeitung auf Trommeln gewickelten Rohre, insbesondere im Bereich deren Umkehrpunkte, mittels eines Fixierelementes in ihrer vorbestimmten Lage festgelegt sind.

## Beschreibung

Die Erfindung betrifft ein Rohrregister R mit beispielsweise mäanderförmigen Verlauf der Rohre auf Systemplatten oder sonstigen Flächen, wie Böden, Wänden, Decken etc. für beispielsweise Sanitär-, Heiz-, Kühl-, Klimaanlagen, Schutzrohre etc., wobei die Rohre durch Halterungen, die die Rohre über deren Durchmesser hinaus umfassen, in ihrer Lage zueinander festgelegt sind.

Derartige Rohrregister, auch vorgefertigte Systemplatten mit darauf verlegten Rohrregistern sind in vielen Ausführungen aus der Klimatechnik bekannt. Systemplatten werden bevorzugt dann verwendet, wenn vorgefertigte Elemente in Neu- oder Altbauten, Freiflächen usw. zur Temperierung eingebaut werden. Auf vielen Heiz- oder Kühlelementen, wie sie in Heiz-, Kühl-, oder kompletten Klimaanlagen eingebaut werden, sind, meist mäanderförmig, Sanitärrohre, Wärmetauscherrohre oder -schläuche aus unterschiedlichen Kunststoffen, wie beispielsweise PVC, PE, PB usw. entweder direkt auf Böden, Wänden Decken usw. oder auf Platten, d.h. Systemplatten, verlegt. Die dabei zu verlegenden Rohrregister müssen auf der Unterlage fixiert sein, selbst dann, wenn sie in Beton, Estrich etc. eingegossen werden. Dabei werden meist längere Abschnitte dieser Rohre im Rohrregister parallel, d.h. mäanderförmig nebeneinander angeordnet, wobei die geradlinigen Abschnitte an den Umkehrpunkten in Bogenform, d.h. sogen Rohrbögen verlegt sind. Durch den Eigendrall der Rohre der durch das Aufwickeln auf Trommeln zur Lagerung und für den Transport bewirkt wird, biegen sich viele dieser Rohrbögen aus der Ebene der parallel verlaufenden Abschnitte auf, unvorteilhafterweise auch vom flächigen Bauteil weg. Es bilden sich dabei Verwerfungen im Rohrregister, die ein gewünschtes Anliegen bzw. einen bestimmten Abstand der Rohrschlangen von der Unterlage, wie z.B. dem Boden, der Wand, Decke selbst, der Systemplatte oder dergl. wegen der hohen dabei auftretenden Kräfte verhindern. Bei Fließestrichen kommt als zusätzliches Erschwernis das Aufschwimmen hinzu. Da für einen guten Wärmeübergang und die rasche Regelung des Systems aber eine möglichst geringe Estrich- bzw. Putzüberdeckung von Vorteil ist, stellen solche Verwerfungen, bzw. Aufschwimmen, die besonders im Bereich der Rohrbögen auftreten, einen Nachteil dar, weil sie zwangsläufig an den eben verbliebenen Abschnitten des Rohregisters, die flach auf der Unterlage aufliegen zu einer zu großen Putzüberdeckung führen. Aus diesem Grunde müssen diese aufgebogenen Abschnitte entweder bei der Voranfertigung oder auf der Baustelle regelmäßig manuell auf den flächigen Bauteil hin oder von dort weg gebogen und dann durch individuell angebrachte Halteelemente fixiert werden, was bei der Montage einen erheblichen Arbeitsaufwand erfordert und die Gefahr einer Beschädigung der Rohre beinhaltet, da jedes dieser Halteelemente individuell eingerichtet und an der flächig ausgebildeten Unterlage befestigt werden muß.

Es sind bereits mehrere Vorschläge bekannt geworden, Wärmetauscherrohre auf Systemplatten und sonstigen Unterlagen, wie Beton, Ziegel usw. zu fixieren. So geht u.a. aus der europäischen Patentanmeldung 0 060 53a7 A1 eine Systemplatte für Fußbodenheizungen hervor, deren Wärmetauscherrohre zwischen hinterschnittenen Erhebungen verlegt sind, die ein Verwerfen der Rohre verhindern. Eine weitere EU Patentanmeldung 0 637 720 A1 zeigt ebenfalls eine Fußbodenheizung aus vorgefertigten Bauelementen, bei der die Rohre zwischen je zwei auf zwei spiegelbildlich aufeinandergelegten Systemplatten angeformten Erhebungen festgelegt sind. Auch die DE OS 28 00 286 und die DE OS 28 3a0 13a9 offenbaren Haltenocken für die Wärmetauscherrohre. Mit der DE 33 00 607 C2 wird eine Flüssigkeitsflächenheizung vorgeschlagen, bei der die Wärmetauscherrohre in Schlitzen von über das in muldenförmigen Kanälen verlegte Rohrregister gestülpten Stegen positioniert sind. Die Umkehrpunkte, d.h. die Rohrbogen zwischen zwei parallel verlaufenden Wärmetauscherrohren sind dabei frei beweglich. Bei der DE 33 18 693a C2 sind die Wärmetauscherrohre in speziellen Halteorganen festgelegt. Aus dem DE GM 77 30 323 geht eine weitere Systemplatte hervor, bei der die mäanderförmig verlegten Wärmetauscherrohre in besonderen Kanälen verlegt sind, wobei auch die Rohrbögen in einem solchen Kanalformstück liegen. Die DE 36 28 975 A1 schlägt Schlauchschellen für die Befestigung von Wärmetauscherschläuchen auf einem Holzlattenrost vor. Schließlich wird mit der EP 0 768 73a2 A1 vorgeschlagen, Sanitär- und Wärmetauscherrohre mittels Rohrhalterungen festzulegen, die das Rohr bis über dessen Durchmesser umfassen.

Diese und ähnliche Anordnungen von Rohrregistern auf Systemplatten weisen sämtliche den Nachteil auf, daß die Verwerfungen der Wärmetauscherrohre, insbesondere im Bereich der Umkehrpunkte, also der Rohrbögen nicht beherrschbar sind und somit Schwierigkeiten beim Verlegen der Wärmetauscherrohre und im Betriebszustand auftreten.

Der Erfindung, wie sie in den Ansprüchen beschrieben ist, liegt daher die Aufgabe zugrunde ein Rohrfixierelement zu schaffen, das auch eine Fixierung der aufgeworfenen Rohrbögen flach auf der Systemplatte oder dergl. auf rasche und einfache Weise ohne zusätzliches Werkzeug und ohne die Gefahr einer Beschädigung der Rohre gestattet.

Die mit der Erfindung erzielten Vorteile ist insbesondere darin zu sehen, daß die meist unvermeidlichen Verwerfungen der Rohre ebenso wie das Aufschwimmen der Rohre im Fließestrich insbesondere im Bereich der Rohrbögen und damit im gesamten Bereich des Rohrregisters mit Sicherheit vermieden sind, dadurch geringere Putzschichten ermöglicht werden, wodurch bei Wärmetauscherrohren eine bessere und raschere Temperierung erzielt wird und die Gefahr von Beschädigungen der Rohre bei manueller Fixierung beispielsweise auf der Systemplatte beseitigt ist. Ein weiterer Vorteil ist in der vereinfachten Montage der Rohrregister bei Verbesserung der Verlegepräzision und eine erhebliche Zeitersparnis zu sehen.

Die Erfindung ist nachstehend anhand eines in den Abbildungen dargestellten Ausführungsbeispieles näher erläutert.
Fig. 1 zeigt die perspektivische Ansicht einer Systemplatte und

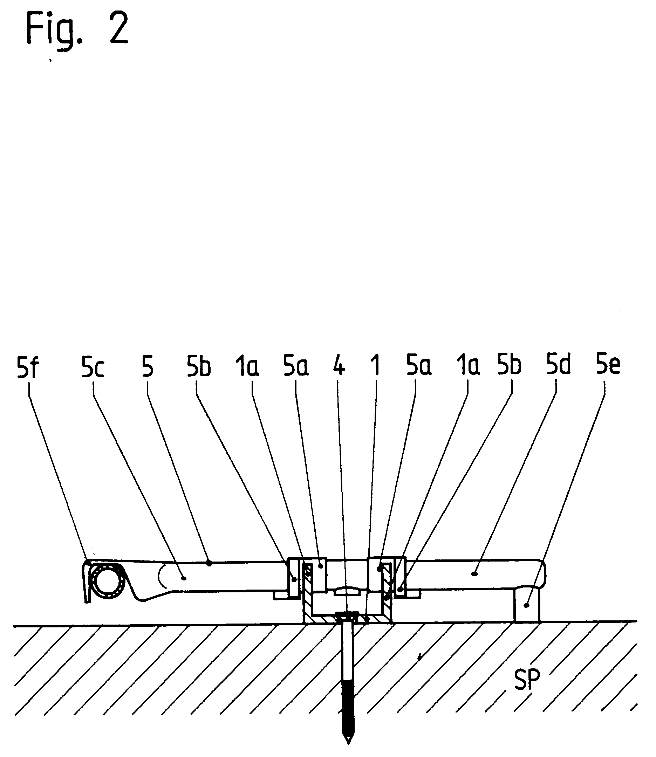

Fig. 2 eine Seitenansicht der Fig. 1

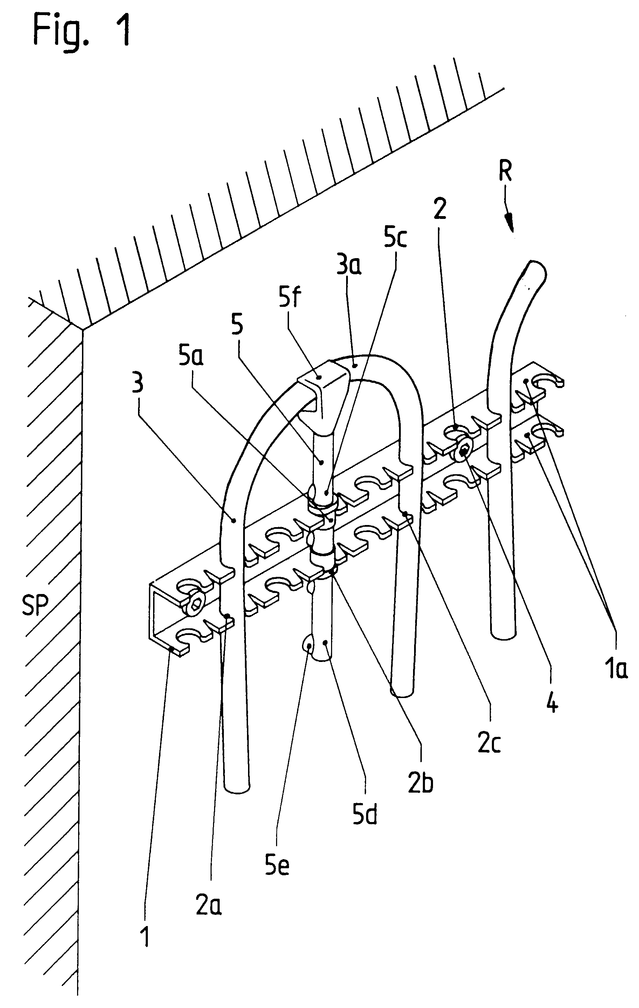

Die Figuren zeigen eine Systemplatte SP oder dergl. Unterlage für das Rohrregister mit einem Abschnitt des darauf angeordneten Rohrregistern R aus z.B. Wärmetauscherrohren 3. Aus der Fig. 1 ist weiter ein Rohrbogen 3a des Wärmetauscherrohres 3 ersichtlich, wobei die geraden, beispielsweise parallel zueinander verlaufenden Abschnitte des Rohrregisters 3 in vorzugsweise fluchtende, das Wärmetauscherrohr 3 über dessen Durchmesser hinaus umfassende Aussparungen 2a und 2c einer Rohrklemmschiene 1 eingelegt und darin verrastet sind. Dazu sind die beiden äußeren Flächen 1a der Rohrklemmschiene 1 aufgebogen. Zwischen den beiden durch die Wärmetauscherrohre 3 des Rohregisters besetzten Aussparungen 2a und 2c der Rohrklemmschiene 1 ist ein Rohrfixierelement 5 für den Rohrbogen 3a in die Aussparung 2b der Rohrklemmschiene 1 eingesetzt. Die Rohrklemmschiene 1 ist mittels Schrauben oder dergl. auf der Systemplatte SP befestigt. Das Rohrregister R ist selbstverständlich mit mehreren Klemmschienen 1 verrastet und mit der Systemplatte SP verbunden, wobei anstelle einer Systemplatte SP auch andere Träger, wie beispielsweise Decke, Wand, Fußboden oder dergl. vorgesehen sein können. Die dem Rohrbogen 3a am nächsten liegende Klemmschiene 1 ist an der Systemplatte SP vorzugsweise mit geringem Spiel befestigt, um geringe Bewegungen des Wärmetauscherrohres 3 in diesem Bereich zu ermöglichen und die Hebelwirkung des Rohrfixierelementes 5 auf den Rohrbogen 3a nicht unnötig zu begrenzen.

Das Rohrfixierelement 5 besteht im wesentlichen aus einem Schaft mit mehreren Abschnitten. Der Abschnitt 5a ist als Mittelbereich desselben quer zu seiner Achse leicht oval ausgebildet und durch beidseitig desselben angeordnete Anschläge 5b von den anschließenden Schaftabschnitten 5c in Richtung des Rohrbogens 3a und 5d in Richtung eines angeformten Fußes 5e beliebigen Querschnittes, zur Abstützung auf der Systemplatte SP, begrenzt. Am entgegengesetzten, rohrseitigen, Ende geht der Schaftabschnitt 5c des Rohrfixierelementes 5 etwas verdickt, in einen, ebenfalls angeformten, muldenförmigen Kopfteil 5f über, das den Rohrbogen 3a von oben umfaßt und diesen auf dem Niveau des Rohres 3 gegenüber der Systemplatte SP hält. Der Schaftabschnitt 5d und der Fuß 5e des Rohrfixierelementes 5 drücken vermöge ihrer Hebelwirkung auf das muldenförmigen Kopfteil 5f und den Schaftabschnitt 5c sowie die Rohrklemmleiste 1 wodurch der Rohrbogen 3a ebenfalls mit Druck beaufschlagt und in Richtung der Oberfläche der Systemplatte SP oder dergl. gehalten ist.

Das Einsetzen des Rohrfixierelementes 5 in die Aussparung 2b der Rohrklemmschiene 1 geschieht indem es mit dem Abschnitt 5a mit der schmalen Seite dessen Ovalität gedrückt und anschließend um 90° gedreht wird, wodurch es in dieser Aussparung fest verrastet ist, sich mit seinem Fuß 5e auf der Systemplatte SP abstützt und durch die beiden Anschläge 5b, die dabei beidseitig der Aussparungen 2 der Rohrklemmleiste 1 zu liegen kommen, auch in axialer Richtung unverrückbar ist. Dabei legt sich das muldenförmige Kopfteil 5f mit seinem nach unten in Richtung Rohrbogen offenen Mulde über den Rohrbogen 3a und hindert diesen daran aufzusteigen, bzw. hält ihn in gewünschtem Abstand von der Oberfläche der Systemplatte SP. Der Abstand des Rohrbogens 3a von der Systemplatte kann in gewissen Grenzen durch Kürzen des Fußes 5e eingestellt werden. Das Einsetzen des Rohrfixierelementes 5 in die Ausschnitte 2 der Rohrklemmleiste 1 wird durch die Ovalität des Mittelabschnittes 5a desselben sehr erleichtert, während ein selbsttätiges Lösen nach dessen Drehung um 90° durch die dabei eintretende Verrastung mit der hinterschnittenen Aussparung 2, selbst bei großer Belastung, mit Sicherheit verhindert ist und der Rohrbogen 3a in seiner Lage fixiert bleibt. Somit ist das Rohrfixierelement 5 und damit der in das muldenförmige Kopfteil 5f eingelegte Rohrbogen 3a in vertikaler, axialer und Querrichtung fixiert. Bei Wärmetauscherrohren größeren Durchmessers kann z.B. ein aus Kunststoff bestehendes Rohrfixierelement 5 auch mit einer, in der Zeichnung nicht dargestellten, Metalleinlage ausgerüstet werden.

Die Erfindung ist selbstverständlich nicht auf das beschriebene Beispiel eines auf einer Systemplatte angeordneten Rohrregister aus Wärmetauscherrohren beschränkt. Sie kann mit Vorteil bei den unterschiedlichsten Rohrregistern, bzw. Rohren mit Rohrbögen, auch in der Elektrotechnik, beispielsweise bei Kabelbäumen, Leerrohren usw. angewandt werden.

### Bezugszeichenliste

- R: Rohrregister
- SP: Systemplatte
- 1: Rohrklemmschiene
- 1a: Seitenwände
- 2: 2a, 2b, 2c, Aussparungen
- 3: Wärmetauscherrohr
- 3a: Rohrbogen
- 4: Befestigungsmittel
- 5: Rohrfixierelement
- 5a: ovaler Mittelabschnitt
- 5b: Anschläge
- 5c: vorderer Schaftabschnitt
- 5d: hintere Schaftabschnitt
- 5e: Fuß
- 5f: muldenförmiges Kopfteil

## Patentansprüche

1. Rohrregister mit beispielsweise mäanderförmigen Verlauf der Rohre auf Systemplatten oder sonstigen Flächen, wie Böden, Wänden, Decken etc. für beispielsweise Sanitär-, Heiz-, Kühl- und Klimaanlagen, Schutzrohre etc., wobei die Rohre durch Halterungen die die Rohre über deren Durchmesser hinaus umfassen in ihrer Lage zueinander festgelegt sind, **dadurch gekennzeichnet,** daß zwischen in zwei Aussparungen (2a und 2c) einer auf einer Systemplatte oder dergl. Fläche befestigten Rohrklemmschiene (1) verrasteten Rohren (3) des Rohrregisters (R) ein Rohrfixierelement (5) in die Aussparung (2b) eingesetzt und verrastet ist, das sich an einem Ende mit seinem Fuß (5e) auf einer Oberfläche der Systemplatte (SP), Wand oder dergl. abstützt und am anderen Ende mit einem muldenförmigen Kopfteil (5f) den Rohrbogen (3a) des Wärmetauscherrohres (3) von oben umfaßt und in vorbestimmten Abstand von der Oberfläche der Systemplatte (SP) oder dergl. Fläche fixiert.

2. Rohrregister (R) nach Anspruch 1, **dadurch gekennzeichnet,** daß die dem Rohrbogen (3a) nächstliegende Rohrklemmschiene (1) mit leichtem Spiel auf der Systemplatte (SP) oder dergl. Fläche befestigt ist.

3. Rohrregister (R) nach Anspruch 1 und 2, **dadurch gekennzeichnet,** daß das Rohrfixierelement (5) einen quer zur Längsachse oval ausgebildeten Mittelabschnitt (5a) der von je einem Anschlag (5b) begrenzt ist aufweist, an diesen Mittelabschnitt (5a) sich nach hinten, etwa parallel zu den Rohren (3) ein Schaftabschnitt (5b) mit einem nach unten in Richtung auf die Oberfläche der Systemplatte (SP) hin gerichteten Fuß (5e) anschließt während ein nach vorn in Richtung auf den Rohrbogen (3a) hin gerichteter Schaftabschnitt an seinem vorderen leicht verdickten Ende einen nach unten hin offenes muldenförmiges Kopfteil (5f) aufweist das nach Einsetzen des Rohrfixierelementes (5) mit der Schmalseite der Ovalität in die Rohrklemmschiene (1) und nachfolgenden Drehen um 90° den Rohrbogen (3a) im Scheitelpunkt von oben umfaßt und sein Fuß (5e) sich auf der Oberfläche der Systemplatte (SP) abstützt.

4. Rohrregister (R) nach Anspruch 1 bis 3, **dadurch gekennzeichnet,** daß das Rohrfixierelement (5) aus Kunststoff besteht.

5. Rohrregister (R) nach Anspruch 1 bis 3a, **dadurch gekennzeichnet,** daß in dem Kunststoff des Rohrfixierelementes (5) eine Metallarmierung enthalten ist.
